# EUROPÄISCHE PATENTSCHRIFT

(11) **EP 1 599 097 B1**
(45) Veröffentlichungstag und Bekanntmachung des Hinweises auf die Patenterteilung: **15.11.2006**
(21) Anmeldenummer: 04715876.1
(22) Anmeldetag: 01.03.2004
(51) Int. Cl.: A21B 3/04, A47J 39/00

(54) **VERFAHREN ZUM STEUERN EINES GARPROZESSES**
METHOD FOR CONTROLLING A COOKING PROCESS
PROCEDE DE COMMANDE D'UN PROCESSUS DE CUISSON

(30) Priorität: 05.03.2003 DE 10309486
(43) Veröffentlichungstag der Anmeldung: 30.11.2005
(73) Patentinhaber: Rational AG, 86899 Landsberg/Lech (DE)
(72) Erfinder: IMGRAM, Judith, 63456 Hanau (DE); JÜRGENS, Andrea, 81245 München (DE); WALLENWEIN, Katharina, 86947 Weil (DE); GARNER, Thomas, 86899 Landsberg/Lech (DE); GREINER, Michael, 85354 Freising (DE); KLASMEIER, Jürgen, 86807 Buchloe (DE); SCHREINER, Thomas, 86857 Hurlach (DE)
(74) Vertreter: Weber-Bruls, Dorothée
(86) Internationale Anmeldenummer: PCT/DE2004/000379
(87) Internationale Veröffentlichungsnummer: WO 2004/077952

(56) Entgegenhaltungen:
- EP-A- 0 386 862
- US-B2- 6 497 907
- PATENT ABSTRACTS OF JAPAN Bd. 012, Nr. 297 (C-519), 12. August 1988 (1988-08-12) & JP 63 068048 A (FUJI:KK; others: 01), 26. März 1988 (1988-03-26)

## Beschreibung

Die vorliegende Erfindung betrifft ein Verfahren zum Regeln eines Garprozesses in dem Garraum eines Gargerätes in Abhängigkeit von dem Taupunkt in dem Innenraum des Gargeräts.

Dem Fachmann sind vielfältige Verfahren zum Regeln von Garprozessen bekannt. Dieser Umstand liegt bereits darin begründet, daß häufig in Abhängigkeit von der Gargutart, der Größe sowie der Menge des Garguts unterschiedliche Garverläufe zu jeweils optimalen Resultaten führen. Das gleiche gilt regelmäßig für das Regenieren von vorgegartem Gargut. Zwar lassen sich vorgegarte Gargüter über die zeitlich vorgegebene Ansteuerung des Dampferzeugungssystems oder über eine Feuchteregelung mittels ein- oder mehrstufiger Zeitablaufprogramme regenerieren, jedoch kommt es dabei häufig zu unkontrollierter Kondensation mit unerwünschter Pfützenbildung oder, im Fall zu geringer Feuchte, zu einem Austrocknen des Garguts, da die durch die Regenierprogramme vorgegebenen Klimaänderungen sich nicht an den tatsächlichen Gegebenheiten im Garverlauf orientieren.

In der DE 198 43 500 A1 wird ein Verfahren zum Betreiben eines Haushaltsgerätes zum drucklosen Dampfgaren beschrieben, bei dem die Dampfmenge mit Hilfe eines durch einen Temperaturfühler erfaßten Temperaturwertes in Abhängigkeit von einem Referenzwert T_{D} gesteuert wird. Dabei erhält man den Temperaturwert T_{D}, indem man im Dampferzeuger des Haushaltsgeräts Wasser solange erhitzt, bis die Temperatur im Garraum nicht weiter ansteigt. Dieser Referenzwert wird am günstigsten im leeren Garraum durchgeführt, also z.B. vor oder während eines Spülgangs. Mit der in der DE 198 43 500 A1 geschilderten Vorgehensweise soll es möglich sein, eine exakte Anpassung an die Umgebungsbedingungen zu erreichen unabhängig davon, daß die gemessene Temperatur im Garraum von der tatsächlichen Temperatur aufgrund von z.B. Toleranzen des Temperaturfühlers abweichen kann. Insbesondere soll verhindert werden, daß eine zu niedrig eingestellte Dampftemperatur verwendet wird, da diese sich negativ auf die Garzeiten und damit das Garergebnis auswirkt. Andererseits soll auch unterbunden werden, daß eine zu niedrige Temperatur gemessen wird, da dieses zur Folge haben kann, daß der Dampferzeuger dann nicht mehr abschaltet. Diesen Nachteilen soll mit dem Verfahren gemäß DE 198 43 500 A1 begegnet werden können. Gleichwohl ist auch mit dem Verfahren gemäß DE 198 43 500 A1 nicht sichergestellt, daß es beim Regenieren von vorgegartem Gargut sowie beim Abkühlprozess nach Beendigung des Garverfahrens zu einer unkontrollierten Kondensation und damit zu einer die Qualität des Garguts nachhaltig beeinträchtigenden Pfützenbildung kommt.

Aus der JP 63068048 A ist ein Dampfgargerät bekannt, bei dem in Abhängigkeit von über einen Temperatursensor und einen Feuchtesensor in einem Garraum erfaßten Werte die Dampfzufuhr zu dem Garraum geregelt wird.

In der US 6,497,907 B2 ist ein Backofen offenbart, dessen Feuchte-Zufuhr und -Abfuhr in Abhängigkeit von in einem Garraum erfaßten Temperatur- und Feuchtewerten geregelt wird, nämlich zum Erreichen von vorherbestimmten Soll-Werten.

Aus der WO 01/59370 A1 ist ein Verfahren zum Steuern eines Garprozesses in dem Garraum eines Gargeräts in Abhängigkeit vom Taupunkt bekannt, wobei das Klima im Garraum in Abhängigkeit von über Sensoren ermittelten Klimaparametern (Temperatur, Feuchtigkeit und Druck) gesteuert wird. Über die Bestimmung des Taupunkts kann auf den Dampfdruck geschlossen und durch dessen gezielte Einstellung das Austrocknen des Garguts verhindert werden.

Die DE 43 41 410 A1 beschreibt einen Back- und Bratofen mit einem elektrisch beheizten Garraum und einem beheizten Dampferzeuger für den Garraum sowie mit einem Heißluftgebläse, wobei im Bereich des Garraums zur Erfassung der Garraum-Dampfkonzentration eine als Feuchtigkeitssensor ausgebildete Meßeinrichtung angeordnet ist, die Bestandteil einer Meßwert-Auswerteinheit ist. In dem Garraum ist ferner eine Kondensatfalle mit Temperatursensor vorgesehen, die einer Kühlungseinheit nachgeschaltet ist. Durch Messung und Auswertung der Garraum-Dampfkonzentration ist eine Regelung des Garraumklimas möglich.

Aus der EP 0 567 813 A1 ist eine Anordnung zum Messen der Feuchtigkeit in einem Gargerät bekannt, welche einen Referenzkörper umfaßt, der zwei Seiten aufweist, von denen eine mit Garraumklima verbunden ist und die andere gekühlt wird. Durch Messen der Temperatur an den beiden Enden sowie des Garraums kann der Taupunkt innerhalb der Garraumatmosphäre bestimmt werden. Aus dem bestimmten Taupunkt kann mit Hilfe abgespeicherter Kurven die relative Luftfeuchte im Garraum abgeleitet werden.

Die US 5,780,818 offenbart ein Verfahren zum Steuern eines Garprozesses mit Heißluft und Dampf, wobei aus dem Verlauf der an bestimmten Punkten innerhalb des Garraums gemessenen Temperatur auf Phasenübergänge im Gargut bzw. Garraumklima geschlossen bzw. aus den Phasenübergängen erkannt werden kann, wann der Dampfgehalt in dem Garraumklima auf einen unter dem Sättigungswert liegenden Wert einzustellen ist.

Aus der DE 199 45 021 A1 ist ein Verfahren zum Steuern eines Garprozesses in Abhängigkeit von mindestens zwei über einen zumindest teilweise in Gargut einsteckbaren Garprozeßfiihler erfaßten Temperaturwerten bekannt, wobei über die Thermokinetik der erfaßten Temperaturwerte spezifische Gargut- und/oder Gargerätgrößen bestimmt werden, und die bestimmten spezifischen Gargut- und/oder Gargerätgrößen zur Garprozeßsteuerung verwendet werden.

Schließlich offenbart die EP 0 386 862 A1 ein Gargerät mit einem Garraum und einer Einrichtung zum Einführen von Wasser in flüssiger oder Dampfform in den Garraum, wobei ferner eine Einrichtung zum Abführen von Feuchtigkeit aus dem Garraum, mindestens ein Feuchtigkeitssensor in dem Garraum und eine Regeleinrichtung vorgesehen sind, über die die Einrichtung zum Abführen von Feuchtigkeit aus dem Garraum bzw. die Einrichtung zum Einleiten von Wasser ansteuerbar sind.

Der vorliegenden Erfindung lag daher die Aufgabe zugrunde, ein Verfahren zum Regeln eines Garprozesses verfügbar zumachen, das nicht mit den Nachteilen des Stands der Technik behaftet ist und das insbesondere in jedweder Situation während des Regenerier- und/oder Garprozesses sicherstellt, daß im Garraum eine unkontrollierte Kondensation, vor allem eine unerwünschte Pfützenbildung auf Zubehörteilen, wie Gastronomiebehältern, Tellern, Blechen, Unterlagen und dergleichen, sowie ein Austrocknen des Garguts nicht eintritt.

Demgemäß wurde ein Verfahren zum Regeln eines Garprozesses in dem Garraum eines Gargerätes in Abhängigkeit von dem Taupunkt im Innenraum des Gargeräts bereitgestellt, umfassend folgende Schritte:
a) Einbringen zumindest eines Garguts, zumindest eines Zubehörs und zumindest eines Referenzkörpers, dessen thermisches Verhalten dem des Zubehörs entspricht, in den Garraum,
b) Ermitteln der Klimaparameter Temperatur und Feuchte am Referenzkörper während des Garprozesses, wobei die Temperatur- und/oder Feuchtemessung zur Taupunktbestimmung an dem Referenzkörper, der Referenzkörperoberfläche, an dem Zubehör und/oder an der Oberfläche des Zubehörs über einen Garprozeßfühler erfolgt, der zumindest teilweise in das Zubehör oder den Referenzkörper eingesteckt, eingeführt oder integriert wird,
c) Bestimmen des aktuellen Ausmaßes des Über- oder Unterschreitens des Taupunktes am Referenzkörper über eine Auswertungseinheit in Abhängigkeit von den in Schritt b) ermittelten Klimaparametern, und
d) Anpassen der Feuchtigkeit und/oder Temperatur im Garraum während des Garprozesses in Abhängigkeit des in Schritt c) bestimmten Ausmaßes des Über- oder Unterschreitens des Taupunkts, so daß das Klima im Garraum taupunktgeregelt wird.

Mit dem erfindungsgemäßen Verfahren geht der Vorteil einher, daß sowohl die Ausbildung von Kondensatpfützen auf dem Gargut und/oder dem Zubehör, insbesondere auf Gargutunterlagen, als auch ein Austrocknen der Gargutoberfläche wirksam unterbunden werden können.

Ein weiterer Aspekt des erfindungsgemäßen Verfahrens sieht dabei vor, daß die Feuchtemessung im Garraum über einen separaten Feuchtesensor, über den Garprozeßfühler und/oder über eine gargeräteeigene Feuchtemessvorrichtung erfolgt.

Bevorzugt ist erfindungsgemäß, daß das Zubehör ein Gastronomiebehälter, ein Teller, ein Blech, eine Unterlage, eine Einhängeleiter, ein Hordengestell und/oder ein Hordengestellwagen ist.

Auch wird vorgeschlagen, daß in Schritt d) für das Klima im Garraum die Feuchte im Garraum, die Feuchtezufuhr in den Garraum und/oder die Feuchtabfuhr aus dem Garraum taupunktgeregelt wird.

Vorteilhafterweise werden dabei die Schritte b) bis d) während des Garprozesses mindestens einmal wiederholt oder laufen zumindest phasenweise kontinuierlich ab.

Vorteilhaft ist bei dem erfindungsgemäßen Verfahren, daß das Temperaturverhalten, insbesondere Aufwärmverhalten, des Zubehörs und/oder Referenzkörpers an sich und/oder in Korrelation zum Temperaturverhalten, insbesondere Aufwärmverhalten, des Garguts im Garraum der taupunktabhängigen Klimaregelung zugrunde gelegt wird.

Als besonders geeignet hat sich eine Ausgestaltung erwiesen, bei der die Feuchte und/oder die Temperatur im Garraum in Schritt d) derart eingestellt wird bzw. werden, daß der Taupunkt nicht oder in einem vorgebbaren Umfang unter- oder überschritten wird.

Von besonderem Vorteil ist des weiteren eine Ausgestaltung des Verfahrens, gemäß der Feuchte aus dem Garraum abgeführt wird, wenn der Taupunkt an der Oberfläche des Referenzkörpers unterschritten wird, oder daß Feuchte in den Garraum eingeführt wird, wenn der Taupunkt an der Oberfläche des Referenzkörpers erreicht oder überschritten wird.

Geeigneterweise wird gemäß einem weiteren Aspekt der Erfindung berücksichtigt, daß der Referenzkörper und/oder das Zubehör bei Einbringung in den Garraum in etwa die gleiche Vorbehandlung wie das Gargut erfahren hat bzw. haben, insbesondere betreffend die Temperaturbehandlung.

Dabei kann ebenfalls in einer weiteren Ausgestaltung des erfindungsgemäßen Verfahrens vorgesehen sein, daß zumindest ein Teil eines Zubehörs als Referenzkörper verwendet wird.

Eine Weiterentwicklung des erfindungsgemäßen Verfahrens ist ferner dadurch gekennzeichnet, daß der Feuchtesensor, der Garprozeßfühler, die Feuchtemeßvorrichtung und/oder der Temperatursensor mit einer Steuer- und/oder Regeleinheit des Gargeräts verbunden wird bzw. werden.

Besonders gute Gar- oder Regenierresultate stellen sich auch dann ein, wenn die Temperatur des Zubehörs und/oder die Feuchte des Garraums beim Abkühlen des Garguts derart eingestellt wird bzw. werden, daß der Taupunkt am Zubehör nicht überschritten wird.

Dabei kann in einer vorteilhaften Ausgestaltung des erfindungsgemäßen Verfahrens vorgesehen sein, daß das Temperaturverhalten von dem Zubehör und/oder Referenzkörper an sich oder in Korrelation zum Gargut und/oder einem Standardgargut, insbesondere unter Berücksichtigung der Beschickungsmenge, bekannt, hinterlegt und/oder abrufbar ist.

Schließlich zeichnet sich ein weiterer Aspekt des erfindungsgemäßen Verfahrens dadurch aus, daß über mindestens eine elektrische Leitfähigkeitsmessung am Referenzkörper und/oder einer separaten Leitfähigkeitsmeßvorrichung, insbesondere in der Nähe der Oberfläche des Referenzkörpers, der Feuchtegehalt, insbesondere ein Über- oder Unterschreiten des Taupunktes, im Garraum, insbesondere an der Oberfläche des Referenzkörpers, bestimmt wird. Zur Kontrolle des Taupunktes über elektrische Leitfähigkeitsmessungen können z.B. kapazitive Hygrometer oder Lithiumchlorid-Tauchpunktfühler eingesetzt werden. Auch kann die Kontrolle des Taupunktes bzw. der Feuchte im Garraum über die Messung des Widerstandes zweier nah zusammenliegender Drähte, die z.B. auf der Unterseite einer Gargutunterlage vorliegen, vorgenommen werden. Mit der Bestimmung des Widerstandes läßt sich ohne weiteres auf ein Über- bzw. Unterschreiten des Taupunktes schließen.

Der vorliegenden Erfindung lag die überraschende Erkenntnis zugrunde, daß sich durch eine Erfassung und Kontrolle der Temperatur von Zubehörteilen im Garraum, insbesondere der Temperatur von Gargutunterlagen, wie z.B. Tellern, und/oder über die Bestimmung und Kontrolle des Taupunktes an der bzw. im Bereich der Oberfläche des Garguts, der Zubehörteile und/oder von Referenzkörpern ein stets optimaler Feuchtegehalt im Garraum einstellen läßt, so daß es nicht zu einer unkontrollierten Kondensation mit unerwünschter Pfützenbildung auf z.B. den Gargutunterlagen kommt. Dabei kann sowohl in Abhängigkeit von der eingestellten und/oder ermittelten Temperatur am Zubehörteil der Feuchtegehalt bzw. die relative Luftfeuchtigkeit im Garraum eingestellt werden, als auch in Abhängigkeit von der relativen Luftfeuchtigkeit im Garraum die Temperatur an einem Zubehörteil geregelt werden. Die Temperatur der Zubehörteile läßt sich bequem und ohne zusätzlichen Aufwand über Temperatursensoren, z.B. Thermoelemente, bestimmen. Darüber hinaus können ebenfalls Garprozeßfiihler, wie z.B. in der DE 199 45 021 A1 beschrieben, zum Einsatz kommen. Ein solcher Garprozeßfühler kann beispielsweise mit einem an einer Spitze vorliegenden Temperatursensor in Kontakt mit einem Zubehörteil oder einem Referenzkörper stehen oder mit einem an dem Zubehörteil oder dem Referenzkörper befestigten separaten Temperatursensor verbunden sein. Indem Referenzkörper eingesetzt werden, deren thermisches Verhalten dem der Zubehörteile, insbesondere dem von Gargutunterlagen, wie Tellern, entspricht, gelingt auf einfache und zuverlässige Weise eine Einstellung des Garraumklimas in Abhängigkeit an die tatsächliche Gegebenheiten, wodurch ein unkontrolliertes Auskondensieren von Flüssigkeit unterbunden werden kann.

## Patentansprüche

1. Verfahren zum Regeln eines Garprozesses in dem Garraum eines Gargeräts in Abhängigkeit von dem Taupunkt im Innenraum des Gargeräts, umfassend folgende Schritte:
a) Einbringen zumindest eines Garguts, zumindest eines Zubehörs und zumindest eines Referenzkörpers, dessen thermisches Verhalten dem des Zubehörs entspricht, in den Garraum,
b) Ermitteln der Klimaparameter Temperatur und Feuchte am Referenzkörper während des Garprozesses, wobei die Temperatur- und/oder Feuchtemessung zur Taupunktbestimmung an dem Referenzkörper, der Referenzkörperoberfläche, an dem Zubehör und/oder an der Oberfläche des Zubehörs über einen Garprozeßfühler erfolgt, der zumindest teilweise in das Zubehör oder den Referenzkörper eingesteckt, eingeführt oder integriert wird,
c) Bestimmen des aktuellen Ausmaßes des Über- oder Unterschreitens des Taupunkts am Referenzkörper über eine Auswertungseinheit in Abhängigkeit von den in Schritt b) ermittelten Klimaparametern, und
d) Anpassen der Feuchtigkeit und/oder Temperatur im Garraum während des Garprozesses in Abhängigkeit des in Schritt c) bestimmten Ausmaßes des Über- oder Unterschreitens des Taupunkts, so daß das Klima im Garraum taupunktgeregelt wird.

2. Verfahren nach Anspruch 1, **dadurch gekennzeichnet, daß** die Feuchtemessung im Garraum über einen separaten Feuchtesensor, über den Garprozeßfühler und/oder über eine gargeräteeigene Feuchtemessvorrichtung erfolgt.

3. Verfahren nach Anspruch 1 oder 2, **dadurch gekennzeichnet, daß** das Zubehör ein Gastronomiebehälter, ein Teller, ein Blech, eine Unterlage, eine Einhängeleiter, ein Hordengestell und/oder ein Hordengestellwagen ist.

4. Verfahren nach einem der vorangehenden Ansprüche, **dadurch gekennzeichnet, daß** in Schritt d) für das Klima im Garraum die Feuchte im Garraum, die Feuchtezufuhr in den Garraum und/oder die Feuchtabfuhr aus dem Garraum taupunktgeregelt wird.

5. Verfahren nach einem der vorangehenden Ansprüche, **dadurch gekennzeichnet, daß** die Schritte b) bis d) während des Garprozesses mindestens einmal wiederholt werden oder zumindest phasenweise kontinuierlich ablaufen.

6. Verfahren nach einem der vorangehenden Ansprüche, **dadurch gekennzeichnet, daß** das Temperaturverhalten, insbesondere Aufwärmverhalten, des Referenzkörpers an sich und/oder in Korrelation zum Temperaturverhalten, insbesondere Aufwärmverhalten, des Garguts im Garraum der taupunktabhängigen Klimaregelung zugrunde gelegt wird.

7. Verfahren nach einem der vorangehenden Ansprüche, **dadurch gekennzeichnet, daß** die Feuchte und/oder die Temperatur im Garraum in Schritt d) derart eingestellt wird bzw. werden, daß der Taupunkt nicht oder in einem vorgebbaren Umfang unter- oder überschritten wird.

8. Verfahren nach einem der vorangehenden Ansprüche, **dadurch gekennzeichnet, daß** Feuchte aus dem Garraum abgeführt wird, wenn der Taupunkt an der Oberfläche des Referenzkörpers unterschritten wird, oder daß Feuchte in den Garraum eingeführt wird, wenn der Taupunkt an der Oberfläche des Referenzkörpers erreicht oder überschritten wird.

9. Verfahren nach einem der vorangehenden Ansprüche, **dadurch gekennzeichnet, daß** der Referenzkörper und/oder das Zubehör bei Einbringung in den Garraum in etwa die gleiche Vorbehandlung wie das Gargut erfahren hat bzw. haben, insbesondere betreffend die Temperaturbehandlung.

10. Verfahren nach einem der vorangehenden Ansprüche, **dadurch gekennzeichnet, daß** zumindest ein Teil eines Zubehörs als Referenzkörper verwendet wird.

11. Verfahren nach einem der vorangehenden Ansprüche, **dadurch gekennzeichnet, daß** der Feuchtesensor, der Garprozeßfühler, die Feuchtemeßvorrichtung und/oder der Temperatursensor mit einer Steuer- und/oder Regeleinheit des Gargeräts verbunden wird bzw. werden.

12. Verfahren nach einem der vorangehenden Ansprüche, **dadurch gekennzeichnet, daß** die Temperatur des Zubehörs und/oder die Feuchte des Garraums beim Abkühlen des Garguts derart eingestellt wird bzw. werden, daß der Taupunkt am Zubehör nicht überschritten wird.

13. Verfahren nach einem der vorangehenden Ansprüche, **dadurch gekennzeichnet, daß** das Temperaturverhalten von dem Zubehör und/oder Referenzkörper an sich oder in Korrelation zum Gargut und/oder einem Standardgargut, insbesondere unter Berücksichtigung der Beschickungsmenge, bekannt, hinterlegt und/oder abrufbar ist.

14. Verfahren nach einem der vorangehenden Ansprüche, **dadurch gekennzeichnet, daß** über mindestens eine elektrische Leitfähigkeitsmessung am Referenzkörper und/oder einer separaten Leitfähigkeitsmeßvorrichung, insbesondere in der Nähe der Oberfläche des Referenzkörpers, der Feuchtegehalt, insbesondere ein Über- oder Unterschreiten des Taupunktes, im Garraum, insbesondere an der Oberfläche des Referenzkörpers, bestimmt wird.

## Claims

1. Method of regulating a cooking process in the cooking compartment of a cooking appliance in dependence on the dew point in the interior of the cooking appliance, comprising the following steps:
a) introducing into the cooking compartment at least one food stuff, at least one accessory and at least one reference body, of which the thermal behaviour corresponds to that of the accessory,
b) determining the climatic parameters of temperature and moisture on the reference body during the cooking process, a cooking-process sensor being used to measure the temperature and/or moisture for determining the dew point on the reference body, the reference-body surface, on the accessory and/or on the surface of the accessory, and the cooking-process sensor being plugged or inserted into, or integrated in, the accessory or the reference body at least in part,
c) determining the current extent to which the dew point on the reference body is overshot or undershot, via an evaluation unit, in dependence on the climatic parameters determined in step b), and
d) adapting the moisture and/or temperature in the cooking compartment during the cooking process in dependence on the extent, determined in step c), to which the dew point is overshot or undershot, so that the climatic conditions in the cooking compartment are dew-point-regulated.

2. Method according to Claim 1, **characterized in that** the moisture-measuring operation in the cooking compartment is carried out via a separate moisture sensor, via the cooking-process sensor and/or via a moisture-measuring device belonging to the cooking appliance.

3. Method according to Claim 1 or 2, **characterized in that** the accessory is a catering container, a plate, a baking sheet, a support, a suspension rack, a tray-type rack and/or a tray-type rack carriage.

4. Method according to one of the preceding claims, **characterized in that** in step d), for the climatic conditions in the cooking compartment, the moisture in the cooking compartment, the supply of moisture into the cooking compartment and/or the removal of moisture from the cooking compartment are/is dew-point-regulated.

5. Method according to one of the preceding claims, **characterized in that** the steps b) to d) are repeated at least once or proceed continuously, at least in phases, during the cooking process.

6. Method according to one of the preceding claims, **characterized in that** the temperature behaviour, in particular heating behaviour, of the reference body in itself and/or in correlation with the temperature behaviour, in particular heating behaviour, of the food stuff in the cooking compartment is used as a basis for the dew-point-dependent regulation of climatic conditions.

7. Method according to one of the preceding claims, **characterized by** an adjustment of the moisture and/or the temperature in the cooking compartment in step d) such that the dew point is undershot or overshot only to a predeterminable extent, if at all.

8. Method according to one of the preceding claims, **characterized in that** moisture is removed from the cooking compartment when the dew point on the surface of the reference body is undershot, or **in that** moisture is introduced into the cooking compartment when the dew point on the surface of the reference body is reached or overshot.

9. Method according to one of the preceding claims, **characterized in that**, upon introduction into the cooking compartment, the reference body and/or the accessory have/has undergone approximately the same pre-treatment as the food stuff, in particular in respect of the temperature treatment.

10. Method according to one of the preceding claims, **characterized in that** at least part of an accessory is used as the reference body.

11. Method according to one of the preceding claims, **characterized in that** the moisture sensor, the cooking-process sensor, the moisture-measuring device and/or the temperature sensor are/is connected to a control and/or regulating unit of the cooking appliance.

12. Method according to one of the preceding claims, **characterized by** an adjustment of the temperature of the accessory and/or the moisture of the cooking compartment during cooling of the food stuff such that the dew point on the accessory is not overshot.

13. Method according to one of the preceding claims, **characterized in that** the temperature behaviour of the accessory and/or reference body in itself or in correlation with the food stuff and/or a standard food stuff, in particular taking account of the charging quantity, is known, stored and/or retrievable.

14. Method according to one of the preceding claims, **characterized in that** at least one electric conductivity measurement on the reference body and/or a separate conductivity-measuring device, in particular in the vicinity of the surface of the reference body, is used to determine the moisture content, in particular overshooting or undershooting of the dew point, in the cooking compartment, in particular on the surface of the reference body.

## Revendications

1. Procédé pour le réglage d'un processus de cuisson dans l'espace de cuisson d'un appareil de cuisson en fonction du point de rosée dans l'espace intérieur de l'appareil de cuisson, comprenant les étapes suivantes :
a) introduction d'au moins un élément à cuire, d'au moins un accessoire et d'au moins un corps de référence, dont le comportement thermique correspond à celui de l'accessoire, dans l'espace de cuisson,
b) détermination des paramètres de climatisation température et humidité sur le corps de référence pendant le processus de cuisson, la mesure de la température et/ou la mesure de l'humidité pour la détermination du point de rosée s'appliquant sur le corps de référence, sur la surface du corps de référence, sur l'accessoire et/ou sur la surface de l'accessoire au moyen d'un capteur de processus de cuisson, qui est emboîté, introduit ou intégré au moins partiellement dans l'accessoire ou le corps de référence,
c) détermination de la proportion actuelle du dépassement ou du sous-dépassement du point de rosée sur le corps de référence au moyen d'une unité d'analyse en fonction des paramètres de climatisation déterminés à l'étape b), et
d) adaptation de l'humidité et/ou de la température dans l'espace de cuisson pendant le processus de cuisson en fonction de la proportion, déterminée à l'étape c), du dépassement ou du sous-dépassement du point de rosée, de sorte que les conditions climatiques dans l'espace de cuisson sont réglées sur le point de rosée.

2. Procédé selon la revendication 1, **caractérisé en ce que** la mesure de l'humidité dans l'espace de cuisson s'effectue au moyen d'un capteur d'humidité séparé, au moyen du capteur du processus de cuisson et/ou au moyen d'un dispositif de mesure d'humidité propre à l'appareil de cuisson.

3. Procédé selon la revendication 1 ou 2, **caractérisé en ce que** l'accessoire est un récipient de gastronomie, une assiette, une tôle, un port, une échelle suspendue, un bâti à claies et/ou un chariot de bâti à claies.

4. Procédé selon l'une quelconque des revendications précédentes, **caractérisé en ce que**, à l'étape d) pour la climatisation dans l'espace de cuisson, l'humidité dans l'espace de cuisson, l'arrivée d'humidité dans l'espace de cuisson et/ou l'évacuation de l'humidité de l'espace de cuisson sont réglées sur le point de rosée.

5. Procédé selon l'une quelconque des revendications précédentes, **caractérisé en ce que** les étapes b) à d) sont répétées au moins une fois pendant le processus de cuisson ou se déroulent de façon continue au moins par phase.

6. Procédé selon l'une quelconque des revendications précédentes, **caractérisé en ce que** le comportement à la température, en particulier le comportement au réchauffement, du corps de référence en soi et/ou en corrélation avec le comportement à la température, en particulier le comportement au réchauffement, de l'élément à cuire dans l'espace de cuisson est pris à la base du réglage des conditions climatiques dépendant du point de rosée.

7. Procédé selon l'une quelconque des revendications précédentes, **caractérisé en ce que** l'humidité et/ou la température dans l'espace de cuisson est ou sont réglées à l'étape d) de telle sorte que le point de rosée n'est pas sous-dépassé ou dépassé ou seulement dans une proportion prédéfinissable.

8. Procédé selon l'une quelconque des revendications précédentes, **caractérisé en ce que** l'humidité est évacuée de l'espace de cuisson lorsque le point de rosée sur la surface du corps de référence n'est pas atteint, ou **en ce que** l'humidité est introduite dans l'espace de cuisson lorsque le point de rosée sur la surface du corps de référence est atteint ou n'est pas atteint.

9. Procédé selon l'une quelconque des revendications précédentes, **caractérisé en ce que** le corps de référence et/ou l'accessoire a ou ont subi lors de l'introduction dans l'espace de cuisson à peu près le même traitement préalable que l'élément à cuire, en particulier en ce qui concerne le traitement au niveau de la température.

10. Procédé selon l'une quelconque des revendications précédentes, **caractérisé en ce qu'**au moins une partie d'un accessoire est utilisée comme corps de référence.

11. Procédé selon l'une quelconque des revendications précédentes, **caractérisé en ce que** le capteur d'humidité, le capteur de processus de cuisson, le dispositif de mesure d'humidité et/ou le capteur de température est ou sont reliés à une unité de commande et/ou de réglage de l'appareil de cuisson.

12. Procédé selon l'une quelconque des revendications précédentes, **caractérisé en ce que** la température de l'accessoire et/ou l'humidité de l'espace de cuisson est ou sont réglées lors du refroidissement de l'élément à cuire de telle sorte que le point de rosée sur l'accessoire n'est pas dépassé.

13. Procédé selon l'une quelconque des revendications précédentes, **caractérisé en ce que** le comportement à la température de l'accessoire et/ou du corps de référence en soi ou en corrélation avec l'élément à cuire et/ou un élément à cuire standard, est connu, est déposé et/ou peut être appelé, en particulier en tenant compte de la quantité de chargement.

14. Procédé selon l'une quelconque des revendications précédentes, **caractérisé en ce que** la teneur en humidité, en particulier un dépassement ou un sous-dépassement du point de rosée, dans l'espace de cuisson, en particulier à la surface du corps de référence, est déterminée au moyen d'au moins une mesure de la conductibilité électrique sur le corps de référence et/ou d'un dispositif de mesure séparé de conductibilité, en particulier à proximité de la surface du corps de référence.
